# EUROPEAN PATENT APPLICATION

(11) **EP 1 101 523 A2**
(43) Date of publication of application: **23.05.2001**
(21) Application number: 00124812.9
(22) Date of filing: 14.11.2000
(51) Int. Cl.: B01D 53/22

(54) **Gas flow purification system and method**

(30) Priority: 16.11.1999 US 440749
(71) Applicant: MILLIPORE CORPORATION, Bedford, Massachusetts 01730-2271 (US)
(72) Inventor: Tsourides, Christ A., Allen, Collin County, Texas 75070 (US)
(74) Representative: Schäfer, Wolfgang, Dipl.-Ing.

(57) **Abstract**

A system and method of integrating gas flow purification components includes an integrated gas diffuser-filter membrane coupled to a bottom side of a gas purifier. The gas first flows through a purifying device that can include a reactive micro matrix located in a cavity within the gas purifier, thus purifying the gas. Next, the gas flows through the integrated diffuser-filter membrane which prevents contaminants from entering a load-lock process chamber.

## Description

### TECHNICAL FIELD OF THE INVENTION

This invention relates generally to gas transport systems and measuring devices, and more particularly to a system and method for integrating various components in a gas transport system, and even more particularly to the integration of gas flow purification components used in semiconductor manufacturing.

### BACKGROUND OF THE INVENTION

Many of today's manufacturing processes require the delivery of gases through a gas flow path having a number of components used to regulate, filter, and monitor the gas flowing through the path. For example, current semiconductor manufacturing processes, such as chemical vapor deposition, require the delivery of ultra-pure gases at proper flow rates and amounts to tools within a process chamber, such as a load-lock process chamber. A number of gas components are typically incorporated into the gas path (commonly referred to for semiconductor manufacturing processes as the gas stick), including gas flow monitors, gas filters, gas purifiers, gas diffusers, and other commercially available components.

The commercial gas path components described above have traditionally been manufactured as separate stand-alone units that are connected together, typically in-line. For example, a gas filter or gas purifier is typically installed upstream of a gas diffuser. One problem with connecting gas components in-line is that they take up a significant amount of space within a semiconductor process area. Adding gas components to a gas path increases its overall length by both component length and the connector length, thus increasing manufacturing costs.

One function the commercial gas path components described may have is to vent a load-lock process chamber. Gas diffusers alone have been used in the past to vent a load-lock process chamber, but these standalone gas diffusers generally had very loose pore structures and could not stop particles from entering the vacuum process chamber of the vent load-lock. Another problem which occurs when venting a load-lock process chamber is that the gas must flow through the gas path components at a very slow rate of 5 psi. If the gas flows any faster then 5 psi, particles or contaminants such as moisture, oxygen, carbon monoxide, and carbon dioxide may blast through the gas filter or gas diffuser and into the load-lock process chamber. These contaminants may land on and contaminate any semiconductor wafers stored inside the load-lock process chamber causing yield bars to drop. To avoid contamination of the load-lock process chamber, the gas flow through the gas path must be slow, thus it takes a long time to vent a load-lock process chamber.

Another problem which occurs on the pumpdown or foreline of the load lock, transfer, cooldown, and process chambers is condensation. When a chamber is evacuated very quickly, condensation can form in the chamber and in the tubing. Current pumpdown procedures are very slow to reduce this formation of condensation.

### SUMMARY OF THE INVENTION

The present invention provides an improved gas flow purification component integration system and method that substantially eliminates or reduces disadvantages and problems associated with previously developed gas flow purification systems and methods used in semiconductor manufacturing.

More specifically, the present invention integrates a gas filter, a gas purifier, and a gas, moisture monitor diffuser to provide an integrated gas purification component system and method which filters contaminants from a gas at a much faster rate. The system and method of integrating gas flow purification components includes an integrated gas diffuser-filter membrane coupled to a bottom side of a gas purifier. The gas first flows through a reactive micro matrix located in a cavity within the gas purifier, thus purifying the gas. Next, the gas flows through the integrated diffuser-filter membrane which allows a gentle laminar flow and prevents contaminants from entering a load-lock process chamber.

The present invention provides another important technical advantage by providing a diffuser-filter membrane which contains a tighter pore structure thus preventing more contaminants from entering the load-lock process chamber.

The present invention provides another important technical advantage by providing faster vent times of process, cooldown, transfer, and load-lock process chambers while reducing the amount of oxygen, hydrocarbons, and moisture in the load-lock process chamber.

The present invention provides an important technical advantage by integrating two or more gas flow components into a single unit thus reducing the gas component footprint and manufacturing costs.

The present invention provides another important technical advantage by providing for faster drydown of a load-lock process chamber.

The present invention provides another important technical advantage by providing an integrated diffuser-filter membrane which keeps a greater number of contaminants which are in the gas line from entering the load-lock process chamber.

The present invention provides another important technical advantage by providing gas monitoring, which allows a process engineer to stop the process and not ruin wafers when moisture is detected, thus saving the batch from potential defects.

### BRIEF DESCRIPTION OF THE DRAWINGS

A more complete understanding of the present invention and the advantages thereof may be acquired by referring to the following description, taken in conjunction with the accompanying drawings in which like reference numbers indicate like features and wherein:
FIGURE 1 illustrates one embodiment of the improved gas flow purification system and method of the present invention; and
FIGURE 2 shows a load lock chamber 20 incorporating an embodiment of the present invention.

### DETAILED DESCRIPTION OF THE INVENTION

Preferred embodiments of the present invention are illustrated in the figures, like numerals being used to refer to like and corresponding parts of various drawings.

The system and method of the present invention includes an integrated gas diffuser-filter membrane coupled to a bottom side of a gas purifier. The gas first flows through a reactive micro matrix located in a cavity within the gas purifier, thus purifying the gas. Next, the gas flows through the integrated diffuser-filter membrane which prevents contaminants from entering a load-lock process chamber.

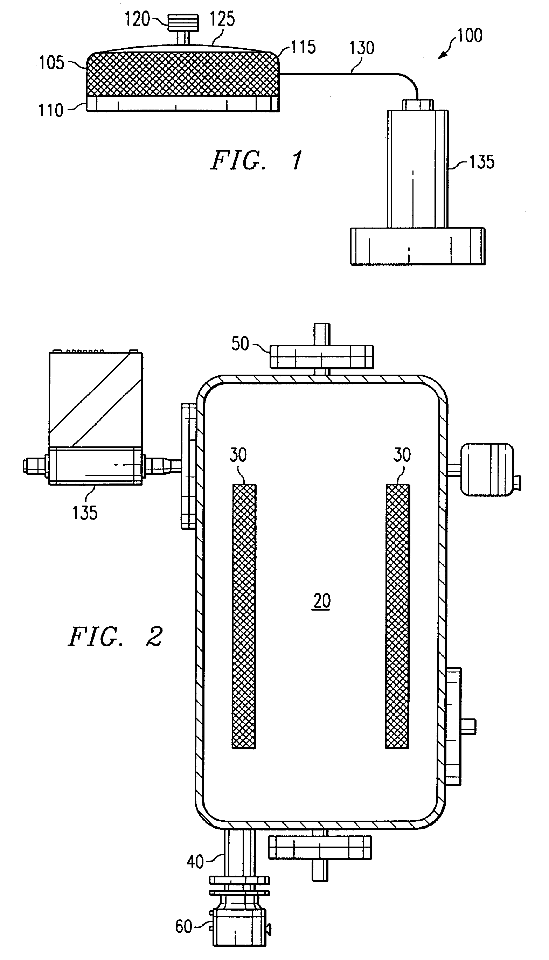

The gas flow purification system 100 shown in FIGURE 1 includes a gas purifier 105, an integrated gas diffuser-filter membrane 110, a gas flow monitor 135, a frit 125 , and a VCR fitting 20. The gas purifier 105 has a cavity 115 which contains a reactive micro matrix used to purify gases of numerous contaminants as they flow through the gas purifier 105. An example of a reactive micro matrix can be found in U.S. Patent No. 5,340,552, which is incorporated herein by reference in its entirety. The purifier cavity 115 may either be tube or disk shaped. The frit 125 is coupled to a top side of the gas purifier 105 and the integrated gas diffuser-filter membrane 110 is coupled to a bottom side of the gas purifier 105 to ensure that none of the reactive micro matrix escapes from the gas purifier cavity 15. The frit 125 can be made of stainless steel, nickel, or chromium or other types of metals (e.g., ceramic Teflon). In one embodiment, the frit 125 may be coupled to the top of the gas purifier 105 by machining it in place. The VCR fitting 120 is coupled to a top side of the frit 125 . A swagelok or numerous other fittings commonly used in the industry may be used in place of the VCR fitting. A kf-50 flange vacuum connection is used to hold a vacuum in the load-lock process chamber. Other industry standard flanges may be used as well.

The gas flow monitor 135 is electrically connected to the integrated gas purifier 105 through an electrical cable 130. The gas flow monitor 135 measures how quickly the gas flow purification system 100 remove contaminants from a particular gas flowing through a gas stick. Another purpose of the gas flow purification system 100 is to rid the load-lock process chamber of oxygen and moisture that gets in when the load-lock process chamber doors are opened and closed. In one embodiment, the gas flow monitor may be placed outside the load-lock process chamber, however in another embodiment, the gas flow monitor may be placed inside the load-lock process chamber. An example of a gas flow monitor 135 can be found in U.S. Patent No. 5,477,716 which is incorporated herein by reference in its entirety.

The integrated gas diffuser-filter membrane 110 is comprised of a gas filter and a gas diffuser which can be coupled together to form one piece of porous metal. The integrated gas diffuser-filter membrane 110 filters out contaminants much better than the standard gas filter or gas diffuser. Most individual gas diffusers and gas filters have a log reduction value (LRV) of one (1) which is not very efficient. The integrated gas diffuser-filter membrane 110 of the present invention can achieve an LRV of three (3) or greater. The industry desires a filter to have an LRV of nine (9). The higher the LRV, the more efficient the gas filter. For example, the integrated gas diffuser-filter membrane 110 may achieve an LRV of nine (9). A gas filtered through the gas diffuser-filter membrane 110 can have less than one (1) parts per billion (PPB) of moisture. Thus the integrated gas diffuser-filter membrane 110 has an increased efficiency with respect to previous solutions. Another added advantage of combining the gas filter and gas diffuser is that the need for a gas filter down-line on the gas stick is eliminated, thus reducing component cost to the end user. Another technical advantage is that by integrating two or more gas flow components together, the horizontal space required by a gas stick is reduced. Reducing the horizontal space will reduce the manufacturing costs. Yet another advantage is that the integrated gas diffuser-filter membrane 110 provides a laminar flow across the integrated gas diffuser-filter membrane 110 surface and fills the chamber quickly. The gas may flow through the integrated gas diffuser-filter membrane 110 at a rate from five (5) to one thousand (1000) liters per minute and still properly remove contaminants. This also provides for faster vent times of process, cooldown, transfer, of load-lock process chambers while reducing the amount of oxygen, hydrocarbons, and moisture in the load-lock chamber. While some prior art gas filters could properly filter the gas, they would typically stir up particles already present in the chamber unless the gas flowed through the prior art gas filter at a slow rate of 5 psi, thus taking a long time to vent a load-lock process chamber. Another advantage of the present invention is the ability to obtain the correct mix of porosity that allows for laminar flow (because a proper DP can be achieved). Another major advantage is that the present invention provides for faster drydown of the load-lock process chamber.

The frit 125 coupled to the top of the gas purifier 105 can be made of stainless steel, nickel, or chromium. One way in which the frit 125 may be coupled to the top of the gas purifier 105 is to machine it in place. The pores within the porous metal of the frit 125 are small enough to prevent any of the reactive micro matrix from escaping from the gas purifier cavity 15, but large enough to filter a gas through the frit 125 . A second integrated diffuser-filter membrane 110 may be coupled to the top side of the gas purifier 105 instead of using a frit 125 in another embodiment.

The reactive micro matrix removes contaminants from a gas before it enters the load-lock process chamber. The reactive micro matrix removes any moisture and oxygen from the gas as it flows through the gas stick and into the load-lock process chamber, thus reducing the defects on wafers which can be located in the load-lock process chamber.

FIGURE 2 shows a view of a load lock chamber 20 incorporating an embodiment of the present invention. FIGURE 2 shows the load lock chamber 20 integrating a chamber diffuser 50 (that can be the earlier described diffuser-filter membrane 110) coupled to the chamber at that removes contaminants from the gas as it flows into the load lock chamber 20. The in-line moisture monitor 135 can monitor the amount of moisture flowing into load lock chamber 20 with the gas. The chamber purification material (or "getter" material) rods 30 are positioned within the load lock chamber 20 to remove moisture and oxygen from the load lock chamber 20 (these chamber purification rods could also comprise the resin purification material described earlier herein). As the load lock chamber 20 is opened and closed during operation, moisture and oxygen can be introduced (which is detrimental to the process). The chamber purification material rods 30 use a getter material to remove this moisture and oxygen. It should be understood that the use of rods is merely one embodiment and the purification material could be placed in the load lock chamber 20 in a number of configurations and located in many locations within the load lock chamber 20. When using a getter material, an external power supply (not shown) can be used to heat the getter material during operation of the load lock chamber 20. Purification and getter materials that are well-known in the industry can be used in this embodiment.

A foreline diffuser 40 connected in-line to a vacuum pump 60 is shown coupled to the load lock chamber 20. The foreline diffuser 40 can be similar in construction to the chamber guard diffuser 50. The load lock chamber 20 is evacuated rapidly using vacuum pump 60 during operation. During this rapid pump-down, condensation can form and the foreline diffuser 40 can capture this condensation to more rapidly dry the load lock chamber 20 and help prevent contamination of the process.

In summary, the system and method of integrating gas flow purification components includes an integrated gas diffuser-filter membrane coupled to a bottom side of a gas purifier. The gas first flows through a reactive micro matrix located in a cavity within the gas purifier, thus purifying the gas. Next, the gas flows through the integrated diffuser-filter membrane which prevents contaminants from entering a load-lock process chamber.

Although the present invention has been described in detail herein with reference to the illustrative embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons of ordinary skill in the art having reference to this description. It is contemplated that all such changes and additional embodiments are within the spirit and true scope of this invention as claimed below.

## Claims

1. A system of integrated gas flow purification components, comprising:
a gas purifier operable to purify a gas of a plurality of contaminants;
a gas filter; and
a gas diffuser, wherein said gas filter and said gas diffuser are coupled together to form an integrated gas diffuser-filter membrane, and wherein said integrated gas diffuser-filter membrane is coupled to a bottom side of said gas purifier, said gas purifier operable to prevent said plurality of contaminants from entering a load-lock process chamber.

2. The system of Claim 1, further comprising:
a VCR fitting coupled to a top side of said frit; and
an ILM monitor electrically connected to said gas purifier, said ILM monitor operable to monitor how quickly said plurality of contaminants are removed from said load-lock process chamber.

3. The system of Claim 1, wherein said gas purifier comprises:
a purifier cavity containing a reactive micro matrix operable to purify said gas of said plurality of contaminants; and
a frit coupled to a top side of said purifier cavity operable to filter said plurality of contaminants.

4. The system of Claim 3, wherein a swagelok fitting is coupled to a top side of said frit.

5. The system of Claim 3, wherein said frit on said top side of said gas purifier and said diffuser-filter membrane on said bottom side of said gas purifier keep said reactive micro matrix within said purifier cavity.

6. The system of Claim 1, wherein said integrated gas diffuser-filter membrane is one piece of porous metal.

7. The system of Claim 1, wherein said integrated gas diffuser-filter membrane filter efficiency can be equal to a log reduction value (LRV) of three (3) or greater.

8. The system of Claim 3, wherein said frit can be machined to said top of said gas purifier cavity.

9. The system of Claim 2, wherein a plurality of pores of said frit are small enough to prevent said reactive micro matrix from escaping from said gas purifier cavity.

10. The system of Claim 3, wherein said purifier cavity may be tube or disk shaped.

11. The system of Claim 1, wherein said gas can flow through said integrated gas diffuser-filter membrane at a rate of 35 psi.

12. A method for integrating a plurality of gas flow purification components, comprising the steps of:
coupling a gas diffuser and a gas filter to form an integrated gas diffuser-filter membrane; and
coupling said integrated gas diffuser-filter membrane to a bottom side of a gas purifier.

13. The method of Claim 12, further comprising the steps of:
filling a cavity within said gas purifier with a reactive micro matrix;
coupling a frit to a top side of said gas purifier to hold said reactive micro matrix between said frit and said integrated diffuser-filter membrane;
coupling a VCR fitting to a top side of said frit; and
electrically connecting an ILM monitor to said gas purifier, said ILM monitor operable to monitor how quickly said plurality of contaminants are removed from said load-lock process chamber.

14. The method of Claim 12, wherein said integrated gas diffuser-filter membrane is operable to prevent said plurality of contaminants from entering a load-lock process chamber.

15. The method of Claim 13, wherein said reactive micro matrix is operable to purify said gas from said plurality of contaminants.

16. The method of Claim 12, further comprising the step of coupling a swagelok to a top side of said frit.

17. The method of Claim 12, wherein said frit and said diffuser-filter membrane contain said reactive micro matrix within said purifier cavity.

18. The method of Claim 12, wherein said integrated gas diffuser-filter membrane is one piece of porous metal.

19. The method of Claim 12, wherein said integrated gas diffuser-filter membrane filter efficiency may be equal to a log reduction value (LRV) of three (3) or greater.

20. The method of Claim 12, further comprising the step of machining said frit to said top of said gas purifier cavity.

21. The method of Claim 12, wherein a plurality of pores of said frit are small enough to prevent said reactive micro matrix from escaping from said purifier cavity.

22. The method of Claim 12, wherein said purifier cavity may be tube or disk shaped.

23. The method of Claim 12, wherein said gas can flow through said integrated gas diffuser-filter membrane at a rate of 35 psi.

24. A system for purification of a semiconductor manufacturing process chamber, comprising:
a chamber guard diffuser coupled to an inlet of the process chamber to reduce the amount of contaminants entering the process chamber;
a chamber purification device positioned within the process chamber and operable to remove contaminants from the process chamber; and
a foreline diffuser coupled to a pumping outlet of the process chamber to absorb condensation during evacuation of the process chamber.

25. The system of claim 24, wherein each of the chamber guard diffuser and the foreline diffuser further comprises:
a gas filter; and
a gas diffuser, wherein said gas filter and said gas diffuser are coupled together to form an integrated gas diffuser-filter membrane.

26. The system of claim 25, wherein the chamber purification device further comprises a purification material or a getter material.

27. The system of claim 24, further comprising an ILM monitor electrically connected to the process chamber and operable to monitor how rapidly contaminants are removed from the process chamber.

28. The system of Claim 25, wherein the gas purifier comprises:
a purifier cavity containing a reactive micro matrix operable to remove contaminants from a gas flowing into the process chamber; and
a frit coupled to the purifier cavity operable to filter contaminants from the gas.

29. The system of Claim 25, wherein the integrated gas diffuser-filter membrane filter efficiency can be equal to a log reduction value (LRV) of three (3) or greater.

30. The system of Claim 25, wherein a gas can flow through the integrated gas diffuser-filter membrane at a rate of 35 psi.
